Europäisches Patentamt

European Patent Office

Office européen des brevets

(11) Publication number: **0 313 895 B1**

## EUROPEAN PATENT SPECIFICATION

(45) Date of publication of patent specification: **23.12.92**

(51) Int. Cl.⁵: **A23L 1/318**, A23L 1/231

(21) Application number: **88116583.1**

(22) Date of filing: **06.10.88**

The file contains technical information submitted after the application was filed and not included in this specification

(54) **Process for preparing marinaded proteinaceous product and product produced thereby.**

(30) Priority: **29.10.87 US 114057**

(43) Date of publication of application:
**03.05.89 Bulletin 89/18**

(45) Publication of the grant of the patent:
**23.12.92 Bulletin 92/52**

(84) Designated Contracting States:
**AT BE CH DE ES FR GB LI NL SE**

(56) References cited:
**BE-A- 683 798          DE-A- 1 492 541
DE-A- 2 934 923          US-A- 3 394 017
US-A- 3 865 958          US-A- 4 076 852**

(73) Proprietor: **INTERNATIONAL FLAVORS & FRA-
GRANCES INC.
521 West 57th Street
New York New York 10019(US)**

(72) Inventor: **Buckholz, Lawrence, Jr.
34 Robin Court
Middletown New Jersey 07748(US)**

(74) Representative: **Baillie, Iain Cameron et al
c/o Ladas & Parry, Altheimer Eck 2
W-8000 München 2(DE)**

Rank Xerox (UK) Business Services

**Description**

My invention concerns the production of a marinaded proteinaceous foodstuff using a novel marinade composition of matter enabling permanent absorption of flavor precursors and/or reaction flavor compositions into a proteinaceous inner food core prior to cooking the resulting marinaded food product.

The art of using marinades is well known. Thus, the publication "Chicken Breasts", Diane Rozas published by Harmony Books/New York, 1985 sets forth on page 11 thereof:

"Marinades: There are two types of marinades, wet and dry. Wet marinades include enough liquid to partially immerse chicken breasts before cooking and later are also used as basting sauces. Dry marinades usually include a combination of herbs and spices and perhaps a small amount of oil, which is rubbed into the chicken. After combining the marinade ingredients with the chicken breast, allow enough time for the flavors to penetrate. Luckily, chicken breasts absorb flavors quickly: 1 to 4 hours at room temperature. Some wet marinades, such as those with lemon juice or wine, also act as tenderizers. Liqueurs impart strong flavors, so use them sparingly."

At page 49 of the Rozas textbook a "Chinese Marinade" is indicated to be capable of being prepared for chicken, thusly:

"Enough for 2 pounds of chicken breasts
3 tablespoons soy sauce
2 tablespoons honey
2 tablespoons hoisin sauce
2 tablespoons white wine vinegar
2 tablespoons rice wine or pale dry sherry
1 teaspoon crushed garlic
1 teaspoon minced ginger root
1 teaspoon sugar
2 tablespoons chicken stock
2 tablespoons Chinese plum sauce (available in Oriental markets)

Marinate chicken breasts in the above ingredients for at least 2 hours before grilling or broiling.

At page 54 of the Rozas textbook, "Tandoori Chicken" using marinade is indicated to be prepared, thusly:

4-6 servings:
3 whole chicken breasts (about 3 pounds), halved
1/3 cup plus 2 tablespoons fresh lemon juice
1 teaspoon salt
$\frac{1}{2}$ teaspoon powdered saffron (or 2 saffron threads, minced)
2 teaspoons crushed coriander seeds
1/4 teaspoon dried red pepper flakes
1 teaspoon cumin
2 large garlic cloves, coarsely chopped
1 teaspoon finely chopped ginger
1 cup plain yogurt
4 tablespoons ($\frac{1}{2}$ stick) butter

1. Prick the chicken breasts all over with a fork several times so the marinade can penetrate the breast meat.

2. Arrange the chicken breasts in a single layer in a shallow glass or ceramic dish.

3. In a bowl, combine 1/3 cup of the lemon juice, salt, and saffron. With your hands, rub this mixture into the chicken breasts.

4. In a small skillet over medium heat, toast the coriander seeds, red pepper flakes, and cumin for about 2 minutes, stirring constantly. Place in a food processor; add the garlic, ginger, and 4 tablespoons of the yogurt, and blend for 30 seconds. Add the remaining yogurt, mix well, and pour over the chicken breasts. Cover tightly and marinate at room temperature for at least 12 hours (or 24 hours in the refrigerator), turning the breasts several times.

5. Prepare the grill or heat the broiler. In a small saucepan over medium heat, melt the butter. Remove the chicken from the marinade and drain off the excess. Baste the chicken breasts with the butter and grill 7 to 9 inches from the hot coals for 4 to 5 minutes on each side, starting with the bone side toward the heat.

6. When the chicken breasts are done, sprinkle with the remaining 2 tablespoons of lemon juice.

At page 55 of the Rozas textbook "Red Wine Marinade" - is indicated to be prepared, thusly:

2

2-4 servings

2 whole chicken breasts (about 2 pounds), halved

Salt and black pepper to taste

Marinade

1/4 cup olive oil

2 medium onions, chopped

1 cup tomato purée

1 teaspoon dried basil (or 1 tablespoon finely chopped fresh basil)

1/3 cup honey

1/4 cup chicken stock

3 tablespoons Worcestershire sauce

1 teaspoon dry mustard

1 cup Italian dry red wine

1. Sprinkle the chicken breasts with salt and pepper.

2. In a heavy skillet over medium heat, heat the olive oil. Sauté the onions until soft. Add the tomato purée, basil, honey, stock, Worcestershire sauce, and mustard; mix together well. Reduce the heat to low and simmer for 15 minutes. Add the wine in the last minute of cooking and heat through. Let cool to room temperature.

3. Arrange the chicken breast pieces in a single layer in a shallow glass or ceramic dish; pour on the marinade and let stand at room temperature for 3 hours, turning several times to coat well.

4. Prepare the grill or heat the broiler. Beginning bone side down, cook the chicken breasts 7 to 9 inches from the coals for 4 to 5 minutes on each side, basting several times.

At page 90 of the Rozas textbook a "Vegetable Marinade" is indicated to be useful for chicken breasts, thusly:

Vegetable Marinade

1/3 cup olive oil

1/4 cup white wine vinegar

2 tablespoons sherry wine vinegar

Salt and black pepper to taste

6 whole large red cabbage leaves

1 bunch large fresh spinach leaves, washed and stems removed

1 pound small tube pasta, such as penne or ziti cooked until el denis, rinsed, drained, and chilled

2 scallions (white and green parts), minced

½ pound cherry tomatoes

1. In a large saucepan or stockpot, bring the stock to a boil; stir in the salt and pepper. Add the chicken breasts, arrange in a single layer, and cover. Lower the heat and simmer 8 to 10 minutes, or until firm. Remove from the heat, uncover, and let cool in the stock. Remove the skin and bones. Cut the chicken breasts into bite-size pieces. Transfer to a large bowl and add the oil, vinegar, garlic, and scallions. Toss gently; refrigerate, covered, until you are ready to assemble the salad.

2. Mix the vegetables with the marinade ingredients. Toss, cover, and refrigerate.

3. To prepare the serving platter, ring the outer edge with the large cabbage leaves. In the center, create a bed for the chicken breast mixture using the spinach leaves. At the last minute, toss the pasta and the vegetables together. Place on the platter, leaving a well in the center for the chicken. Place the chicken in the well, sprinkle with scallions, and decorate the platter with cherry tomatoes. Keep refrigerated until serving time.

Belgian Patent 683798 describes the production of food flavoring agents including one that is stated to have the empirical formula $C_{10} H_{14} O_3 S$ obtained by refluxing together cysteine hydrochloride, thiamine hydrochloride, vegetable protein hydrolyzate water, palmitic acid, glutamic acid, potassium chloride, potassium monohydrogen phosphate, ammonium monohydrogen phosphate, phosphoric acid and calcium lactate. The product is stated to have a beef aroma.

The present invention concerns a process for producing a marinaded proteinaceous product comprising the steps of:

(a) providing a proteinaceous inner food core having a first outer surface;

(b) preparing a mixture of:

(i) an inorganic non-toxic phosphate salt;

3

(ii) a non-toxic edible salt other than a phosphate;

(iii) water; and

(iv) a reaction flavor or mixture of reaction flavor precursors (as defined, infra);

and

(c) coating the resulting mixture prepared in (b) onto said first surface and simultaneously causing the mixture of (b) to be in intimate contact with substantially the entirety of said first surface for a period of time sufficient to cause the proteinaceous inner food core to permanently absorb or adsorb the flavor composition and/or flavor precursors from the mixture (b); and, optionally,

(d) cooking the resulting coated proteinaceous inner core.

The reaction flavors useful in the practice of the invention include, those set forth in the following U.S. Patents:

U.S. Patent 3,394,017 issued on July 23, 1968;

U.S. Patent 3,394,016 issued on July 23, 1968;

U.S. Patent 4,076,852 issued on February 28, 1978; and

U.S. Patent 4,081,565 issued on March 28, 1978,

for example, the reaction product of thiamine,

cysteine and hydrolyzed vegetable protein (hereinafter referred to, also, as 'HVP').

Furthermore, the marinade composition may contain precursors of the thus produced meat flavors as opposed to the meat flavors themselves; or the marinade composition may contain mixtures of precursors and finished food flavors, e.g., a 50:50 weight:weight mixture of the reaction product of cysteine thiamine and HVP taken further together with unreacted cysteine, thiamine and HVP; or a reaction product of cysteine, thiamine and enzymatic digest of beef taken further together with the individual components; cysteine, thiamine and enzymatic digest of beef.

Any inorganic non-toxic phosphate salt may be used in the practice of the invention, for example, tripotassium phosphate, trisodium phosphate, sodium mono acid phosphate, potassium mono acid phosphate, magnesium phosphate and the like.

In addition to the aforesaid individual phosphates, salt compositions containing such phosphates may be used, for example, the salt compositions exemplified in the following U.S. Patents:

U.S. Patent 4,471,002 issued on September 11, 1984;

U.S. Patent 4,514,431 issued on April 30, 1985; and

U.S. Patent 4,514,094 issued on April 30, 1985.

The percent of salt (including phosphate), flavor composition and/or flavor precursor composition in water for the marinade composition may vary from about 20% up to about 40% by weight with a preferred range of from about 25% up to about 35% by weight of the liquid marinade composition.

The percent of salt other than phosphate salt may vary from about 10 up to about 25% by weight of the liquid marinade composition. The percentage of phosphate salt in the liquid marinade composition may vary from about 4 up to about 15% by weight of the liquid marinade composition with a preferred range of from about 4.5 up to about 8.0% by weight. The percentage of flavor composition and/or flavor precursor composition in the liquid marinade composition may vary from about 10% by weight of the composition up to about 40% by weight of the composition.

In the practice of the invention, a marinade containing phosphate, a salt other than phosphate, and a flavor composition and/or flavor precursor composition is suspended in a uniform slurry. The slurry is added to the desired proteinaceous substance, e.g., meat such as meat muscle tissue; and allowed to absorb by tumbling in a vacuum drum or manually folding in an open drum.

Proteinaceous substances that can be treated in this manner are beef pieces, cubes, steaks, chops; chicken parts; fish and bean curd.

The muscle meat when it is used is very sponge-like and will absorb the marinade. Thus, the marinade is both absorbed and adsorbed allowing the phosphate salt to increase the water binding properties of the meat tissue, carrying flavor and/or flavor precursor composition into the meat tissue as an effective application.

The meat product can then be blast-chilled, formed and refrozen for storage until end product use.

A second method involves the aforementioned preparation but also involves the pumping of the marinade composition into a meat carcass using a state of the art needle applicator.

Meats flavored using the aforementioned marinade compositions can be microwaved, conventionally baked, fried, deep-fried or otherwise cooked without loss or degradation to the flavor.

Hence, reaction flavors and/or reaction flavor precursors useful in the practice of my invention totally enhance meat products, patties, frozen entres, microwave dishes, fast food patties and nuggets.

The following example is illustrative of my invention.

The following mixture is prepared:

| Ingredients | Parts by Weight |
|---|---|
| Water........................ | 79.6% |
| Flavor (produced according to Example I of U.S. Letters Patent Patent (4,081,565). ... | 12.5% |
| Sodium chloride................. | 6.2% |
| Tripotassium phosphate.......... | 4.4% |

The resulting mixture, at a rate of 8% is injected into a brisket of beef carcass. The marinade composition is thoroughly absorbed into the meat and maintained for a period of 1.5 hours.

The resulting product is then cooked at 380°F. (193°C.) and then subjected to a 30 second blast-freeze.

The resulting product has an enhanced and succulent meat flavor.

**Claims**

1. A process for preparing a marinated proteinaceous food product comprising the steps of:
   (a) providing a proteinaceous inner food core having a first outer surface;
   (b) preparing a mixture of:
      (i) 4-8% of the mixture of an inorganic non-toxic phosphate salt;
      (ii) 6.2 to 25% of the mixture of a non-toxic edible salt other than a phosphate salt;
      (iii) water; and
      (iv) a reaction flavor or mixture of reaction flavor precursors for a reaction product which is a reaction product of cysteine, thiamine and hydrolyzed vegetable protein, enzymatic digest of meat or beef or is a reaction product of one or more amino acids and thiamine;
      and
   (c) coating the resulting mixture prepared in (b) onto said first surface and simultaneously causing the mixture of (b) to be in intimate contact with substantially the entirety of said first surface for a period of time sufficient to cause the proteinaceous inner food core to permanently absorb or adsorb the flavor composition and/or flavor precursors from the mixture (b); and, optionally,
   (d) cooking the resulting coated proteinaceous inner core.

2. A process for preparing a marinated proteinaceous food product comprising the steps of:
   (a) providing a proteinaceous inner food core having a first outer surface;
   (b) preparing a mixture of:
      (i) 4-8% of the mixture of an inorganic non-toxic phosphate salt;
      (ii) 6.2 to 25% of the mixture of a non-toxic edible salt other than a phosphate salt;
      (iii) water; and
      (iv) a reaction flavor or mixture of reaction flavor precursors which is a reaction product of cysteine, thiamine and hydrolyzed vegetable protein, enzymatic digest of meat or beef or a reaction product of one or more amino acids and thiamine;
      and
   (c) injecting the resulting mixture prepared in (b) into the proteinaceous inner food core using a needle applicator to cause the proteinaceous inner food core to permanently absorb or adsorb the flavor composition and/or flavor precursors from the mixture (b); and, optionally,
   (d) cooking the resulting proteinaceous inner core.

**3.** A process according to claims 1 and 2, wherein said mixture is both applied to the surface of said proteinaceous food product and pumped into the proteinaceous inner food core using a needle applicator.

**Patentansprüche**

**1.** Verfahren zum Herstellen eines marinierten eiweißhaltigen Nahrungsmittelprodukts mit folgenden Schritten:

(a) es wird ein eiweißhaltiger innerer Nahrungsmittelkern verwendet, der eine erste Außenfläche hat;

(b) es wird ein Gemisch hergestellt, das

(i) zu 4 bis 8% aus einem anorganischen, nichttoxischen Phosphatsalz,

(ii) zu 6,2 bis 25% aus einem nichttoxischen genießbaren Salz, das kein Phosphatsalz ist;

(iii) aus Wasser und

(iv) aus einem Reaktionsaromastoff oder einem Gemisch von Reaktionsaromastoffenstoff-Vorstufen für ein Reaktionsprodukt besteht, das ein Reaktionsprodukt des Cysteins, Thiamins und eines hydrolysierten pflanzlichen Eiweißes, eines enzymatischen Verdauungsprodukts von Rindfleisch oder anderem Fleisch oder ein Reaktionsprodukt von einer oder mehreren Aminosäuren und Thiamin ist; und

(c) die genannte erste Fläche wird mit dem in (b) hergestelltem Gemisch überzogen und gleichzeitig damit wird das in (b) erhaltene Gemisch im wesentlichen mit der ganzen ersten Fläche solange in innige Berührung gebracht, daß der eiweißhaltige innere Nahrungsmittelkern die Aromastoffzusammensetzung und oder die Aromastoff-Vorstufen des Gemisches (b) dauerhaft absorbiert oder adsorbiert, und gegebenenfalls

(d) der so erhaltene überzogene eiweißhaltige Innenkern wird gegart.

**2.** Verfahren zum Herstellen eines marinierten eiweißhaltigen Nahrungsmittelprodukts mit folgenden Schritten:

(a) es wird ein eiweißhaltiger innerer Nahrungsmittelkern verwendet, der eine erste Außenfläche hat;

(b) es wird ein Gemisch hergestellt, das

(i) zu 4 bis 8% aus einem anorganischen, nichttoxischen Phosphatsalz,

(ii) zu 6,2 bis 25% aus einem nichttoxischen genießbaren Salz, das kein Phosphatsalz ist;

(iii) aus Wasser und

(iv) aus einem Reaktionsaromastoff oder einem Gemisch von Reaktionsaromastoffrenstoff-Vorstufen für ein Reaktionsprodukt besteht, das ein Reaktionsprodukt des Cysteins, Thiamins und eines hydrolysierten pflanzlichen Eiweißes, eines enzymatischen Verdauungsprodukts von Rindfleisch oder anderem Fleisch oder ein Reaktionsprodukt von einer oder mehreren Aminosäuren und Thiamin ist; und

(c) das in (b) hergestellte Gemisch wird unter Verwendung eines Nadelapplikators in den eiweißhaltigen inneren Nahrungsmittelkern injiziert, damit der eiweißhaltige innere Nahrungsmittelkern die Aromastoffzusammensetzung und/oder die Aromastoff-Vorstufen des Gemisches (b) dauerhaft absorbiert oder adsorbiert, und gegebenenfalls

(d) der so erhaltene eiweißhaltige Innenkern wird gegart.

**3.** Verfahren nach Anspruch 1 und 2, dadurch gekennzeichnet, daß das genannte Gemisch sowohl auf die Überfläche des eiweißhaltigen Nahrungsmittelprodukts aufgetragen als auch mit einem Nadelapplikator in den eiweißhaltigen inneren Nahrungsmittelkern gepumpt wird.

**Revendications**

**1.** Procédé de préparation d'un produit alimentaire protéinique mariné, comprenant les étapes consistant:

(a) à fournir un noyau alimentaire interne protéinique ayant une première surface externe;

(b) à préparer un mélange:

(i) de 4 à 8% du mélange d'un sel de phosphate minéral non-toxique;

(ii) de 6,2 à 25% du mélange d'un sol comestible non-toxique autre qu'un sel de phosphate;

(iii) d'eau; et

(iv) d'un arôme réactionnel ou d'un mélange de précurseurs d'arômes réactionnels pour un produit réactionnel qui est un produit réactionnel de la cystéine, de la thiamine et d'une protéine végétale hydrolysée, d'un concentré d'enzymes de viande ou de boeuf ou est un produit réactionnel d'un ou de plusieurs aminoacides et de la thiamine; et

(c) à recouvrir le mélange résultant préparé en (b) sur ladite première surface et à forcer simultanément le mélange de (b) à être en contact intime avec pratiquement l'intégralité de ladite surface pendant une durée suffisante à forcer le noyau alimentaire interne protéinique à absorber ou à adsorber de façon permanente la composition d'arôme et/ou les précurseurs d'arômes du mélange (b); et, facultativement,

(d) à faire cuire le noyau interne protéinique recouvert résultant.

2. Procédé de préparation d'un produit alimentaire protéinique mariné comprenant les étapes consistant:

(a) à fournir un noyau alimentaire interne protéinique ayant une première surface externe;

(b) à préparer un mélange

(i) de 4 à 8% du mélange d'un sel de phosphate minéral non toxique;

(ii) de 6,2 à 25% du mélange d'un sel comestible non toxique autre qu'un sel du phosphate;

(iii) d'eau; et

(iv) d'un arôme réactionnel ou d'un mélange de précurseurs d'arômes réactionnels qui est un produit réactionnel de la cystéine, de le thiamine et d'une protéine végétale hydrolysée, d'un concentré d'enzymes de viande ou de boeuf ou, est un produit réactionnel d'un ou de plusieurs aminoacides et de la thiamine;

et

(c) à injecter le mélange résultant préparé en (b) dans le noyau alimentaire interne protéinique en utilisant un applicateur sous forme d'aiguille pour forcer le noyau alimentaire interne protéinique à absorber ou à adsorber de façon permanente la composition d'arôme et/ou des précurseurs d'arômes du mélange (b); et, facultativement,

d) à faire cuire le noyau interne protéinique résultant.

3. Procédé selon les revendications 1 et 2, dans lequel ledit mélange est à la fois appliqué à la surface dudit produit alimentaire protéinique et est pompé dans le noyau alimentaire interne protéinique au moyen d'un applicateur sous forme d'aiguille.